# EUROPEAN PATENT APPLICATION

(11) **EP 4 826 925 A1**
(43) Date of publication of application: **21.10.2026**
(21) Application number: 25170752.7
(22) Date of filing: 15.04.2025
(51) Int. Cl.: H01S 3/036, H01S 3/223, H05G 2/00

(54) **METHOD OF OPERATING A GAS-LASER, GAS-LASER AND EUV LIGHT SOURCE**

(71) Applicant: TRUMPF Lasersystems for Semiconductor Manufacturing SE, 71254 Ditzingen (DE); ASML Netherlands B.V., 5500 AH Veldhoven (NL)
(72) Inventor: Schulz, Joachim, 70839 Gerlingen (DE); Etzel, Kai, 74354 Besigheim (DE); Dilissen, Ruben Hendrik C, 5500 AH Veldhoven (NL); Frei, Stefan, 76137 Karlsruhe (DE)
(74) Representative: DREISS Patentanwälte PartG mbB

(57) **Abstract**

Method of operating a gas-laser (10), in particular a CO₂-laser. The gas-laser (10) comprises a power amplifier (28). A gaseous composition is feedable to the power amplifier (28). The gaseous composition is a laser-active medium for generating or amplifying a laser beam (50). The gaseous composition comprises at least a first gas (20) and a second gas (22). The first gas (20) has a lower density than the second gas (22). The gas-laser (10) is adapted to be set in a standby mode or in a sleep mode. The method comprises: feeding the power amplifier (28) with the first gas (20) and the second gas (22) while the gas-laser (10) is in the standby mode; and stopping the feed of the second gas (22) to the power amplifier (28) while the gas-laser (10) is in the sleep mode.

## Description

The invention relates to a method of operating a gas-laser, a gas-laser and an EUV light source.

Extreme ultraviolet radiation (EUV radiation) enables the high-precision imaging of fine structures. For this reason, EUV radiation are often used in lithography, which can therefore be called EUV lithography. The advantage of being able to image fine structures with particular precision and accuracy makes EUV lithography suitable for the production of integrated circuits, in particular for the production of microchips.

An EUV light source usually generates EUV radiation. The EUV radiation may have a wavelength in a range from 5 nm (nanometers) to 120 nm, in particular 8 nm to 15 nm. Electromagnetic radiation, which has a wavelength in the range from 5 nm to 120 nm, in particular 8 nm to 15 nm, may be referred to as EUV radiation.

The EUV light source may comprise a gas-laser whose beam is directed on a target material. The laser beam may interact with the target material to bring the target material into a plasma state, causing the target material to generate the EUV radiation. A collection-mirror of the EUV light source may collect the emitted EUV radiation.

The collection-mirror may direct the collected EUV radiation towards a scanner of the EUV light source to direct the collected EUV radiation to a target and/or to move the collected EUV radiation over the target. The target may be a mask of an EUV lithography system.

It is an object of the invention to provide a method of operating a gas-laser, a gas-laser and an EUV light source, each of which enables to reduce the costs of operation.

This object is solved by a method of operating a gas-laser according to claim 1, a gas-laser according to claim 8 and an EUV light source according to claim 15.

A method according to the invention is configured to operate a gas-laser. The gas-laser comprises a power amplifier. A gaseous composition, in particular a laser-active gaseous composition, is feedable to the power amplifier. The gaseous composition is a laser-active medium for generating or amplifying a laser beam. The gaseous composition comprises at least a first gas and a second gas. The first gas has a lower density than the second gas. The gas-laser is adapted to be set or switched in a standby mode or in a sleep mode. The method includes the following: feeding the power amplifier with the first gas and the second gas, when the gas-laser is in the standby mode; and stopping the feed of the second gas to the power amplifier, when the gas-laser is in the sleep mode.

The advantage of stopping the feed of the second gas to the power amplifier in the sleep mode may be that a gas mass inside the power amplifier can be reduced. This may be because the density of the second gas is higher than the density of the first gas. The reduction of the gas mass in the power amplifier may result in a lower gas mass being transported through the power amplifier, when the power amplifier is in the sleep mode. This may reduce the energy required to transport the gas mass through the power amplifier, resulting in lower energy consumption by the gas-laser. Thus, the method of operating a gas-laser may enable a more energy-efficient sleep mode for the gas-laser. Therefore, the method may reduce the energy costs of the gas-laser and enable cost-effective operation of the gas-laser.

In particular, the energy consumption of the laser may be reduced by 2% to 10% when the method is applied.

The gas-laser may be a CO₂-laser.

The gaseous composition may comprise a mixture of the first gas and the second gas. The gaseous composition may be adapted to generate and/or amplify the laser beam, when the gaseous composition is excited. The excitation of the gaseous composition may be done with a radiofrequency field or a high-frequency field. The gas-laser may be adapted to generate the radiofrequency field or the high-frequency field.

The power amplifier may be a section of the gas-laser, which is adapted to generate or amplify a laser beam, when the gaseous composition is fed to the power amplifier.

The power amplifier may comprise a tube. The power amplifier may comprise an inlet for introducing the first gas and/or the second gas into the power amplifier, in particular into the tube, and an outlet for discharging the first gas and/or the second gas from the power amplifier, in particular from the tube. The power amplifier may comprise electrodes for applying a radiofrequency field or high-frequency field to the gaseous composition in the power amplifier. The radiofrequency field or high-frequency field may excite the gaseous composition in the power amplifier in such a way that the gaseous composition in the power amplifier generates the laser beam or amplifies the laser beam.

The gaseous composition may comprise a third gas. The third gas may have a lower density than the second gas and a higher density than the first gas. The method may include the following: feeding the power amplifier with the third gas, when the gas-laser is in the standby mode; and stopping the feed of the third gas to the power amplifier, when the gas-laser is in the sleep mode. The third gas may be nitrogen (N₂).

The density of the first gas may be more than 5 times or 10 times lower than the density of the second gas. In particular, the density of the first gas may be lower than 0,25 kg/m³ (kilogram per cubic meter).

In the standby mode the power amplifier may be fed with the gaseous composition. In the standby mode the power amplifier may be ready to generate or amplify the laser beam.

The sleep mode may be an energy saving mode. The sleep mode may last for at least 5 minutes, in particular for at least 120 minutes. In the sleep mode the power amplifier may not be ready to generate or amplify the laser beam. The sleep mode may comprise at least a period during which a gas concentration of the first gas in the power amplifier is more than 98%, in particular 99% or 100%.

The gas-laser may comprise a control device being adapted to set the gas-laser in the standby mode or in the sleep mode. The control device may set the gas-laser in the sleep mode, if the gas-laser is expected not to generate or amplify the laser beam for at least 3 or 5 minutes.

The feeding of the power amplifier with the first gas and the second gas may be done by introducing the first gas and the second gas from a gas source into the power amplifier. The gas source may be adapted to provide a mass flow of the first gas and a mass flow of the second gas. Alternatively or additionally, the feeding of the power amplifier with the first gas and the second gas may be done by transporting at least a portion of the first gas and at least a portion of the second gas from the outlet of the power amplifier to the inlet of the power amplifier. The gas-laser may comprise a gas circuit for transporting at least the portion of the first gas and at least the portion of the second gas from the outlet to the inlet.

The stopping of the feed of the second gas to the power amplifier may be done by stopping to introduce the second gas into the power amplifier. In particular, the stopping of the feed of the second gas to the power amplifier may be done by stopping the feed of the second gas from the gas source to the power amplifier. Alternatively or additionally, the stopping of the feed of the second gas to the power amplifier may be done by stopping the transport of the second gas from the outlet to the inlet while at least the portion of the first gas is transported from the outlet to the inlet. The stopping the transportation of at least the portion of the second gas from the outlet to the inlet may be done by filtering the second gas out of the gaseous composition exiting the power amplifier through the outlet while transporting the first gas from the outlet to the inlet.

The feed of the second gas to the power amplifier may not stop, when the gas-laser is in the standby mode. The feed of the second gas to the power amplifier may stop at any time while the gas-laser is in the sleep mode.

When the feed of the second gas to the power amplifier is stopped, the power amplifier may be fed with the first gas.

In an embodiment of the invention, the method may further comprise the following: feeding the power amplifier only with the first gas, when the gas-laser is in the sleep mode. The advantage may be that the energy costs of the gas-laser can be further reduced. This may ensure that only the first gas is present in the power amplifier.

In an embodiment of the invention, the method may further comprise the following: feeding the power amplifier with the first gas while the feed of the second gas to the power amplifier is stopped, in particular while the gas-laser is in the sleep mode. This may ensure that only the first gas is present in the power amplifier.

In an embodiment of the invention, the method may further comprise the following: replacing the second gas in the power amplifier with the first gas, when the gas-laser is in the sleep mode. Since the volume may be constant and the first gas may have a lower density than the second gas, a lower mass may be transported through the power amplifier, thus reducing the energy consumption of the gas-laser.

The replacement of the second gas in the power amplifier may be done by stopping the feed of the second gas to the power amplifier and/or by feeding the first gas to the power amplifier.

In an embodiment of the invention, the method may further comprise the following: reducing a gas pressure in the power amplifier, when the gas-laser is set from the standby mode to the sleep mode. This allows the gas mass in the power amplifier to be further reduced, resulting in lower energy consumption of the gas-laser. Furthermore, reducing the gas pressure in the power amplifier may accelerate the effect of reduced energy consumption by stopping the feed of the second gas to the power amplifier. This may be because the gas inside the power amplifier may reach a high concentration of the first gas more quickly.

The gas pressure may be a pressure in, in particular inside, the power amplifier. If only the first gas is in, in particular inside, the power amplifier, the gas pressure may be a pressure of the first gas. If the first gas and the second gas are in, in particular inside, the power amplifier, the gas pressure may be a pressure of the first gas and the second gas.

The gas pressure in the power amplifier in the standby mode may have a higher value than the gas pressure in the power amplifier in the sleep mode. The gas pressure in the power amplifier in the standby mode may be at least 5 times or 10 times higher than the gas pressure in the power amplifier in the sleep mode.

The gas pressure in the power amplifier may be reduced immediately when setting the gas-laser from the standby mode to the sleep mode.

In an embodiment of the invention, the feed of the second gas to the power amplifier may stop, when the gas pressure in the power amplifier is equal to or lower than a predetermined gas pressure. This may reduce a gas consumption of the gas-laser.

The predetermined gas pressure may comprise a value in a range from 5 mbar (millibar) to 250 mbar.

The method may comprise the following: feeding the power amplifier only with the first gas, when the gas pressure in the power amplifier is equal to or lower than the predetermined gas pressure.

In an embodiment of the invention, the feeding of the second gas to the power amplifier may be stopped depending on a measured gas pressure in the power amplifier. The measured gas pressure may cause stopping the feeding of the second gas to the power amplifier. This may simplify the control of the gas-laser.

The method may include the following: measuring the gas pressure in the power amplifier. The gas pressure may be measured in the sleep mode, in particular continuously.

For example, if the gas-laser is in the sleep mode and if the measured gas pressure is below a threshold for the gas pressure, in particular the predetermined gas pressure, the feeding of the second gas to the power amplifier may be stopped. If the gas-laser is in the sleep mode and if the measured gas pressure is above the threshold for the gas pressure, the second gas may be fed to the power amplifier.

In an embodiment of the invention, the feed of the second gas to the power amplifier may stop, when the gas-laser is in the sleep mode and when the gas pressure in the power amplifier remains constant over a period, in particular over 2, 3 or 5 seconds.

The method may comprise the following: feeding the power amplifier only with the first gas, when the measured gas pressure in the power amplifier remains constant over the period.

In an embodiment of the invention, the method may comprise: reducing a flow rate of the first gas through the power amplifier, when the gas-laser is in the sleep mode. This may further reduce the energy consumption of the gas-laser.

The flow rate may describe a volume of the first gas flowing through the power amplifier per unit of time. For example, the volume of the first gas flowing through the outlet of the power amplifier may be measured and the flow rate may be calculated by dividing the measured volume of the first gas flowing through the outlet of the power amplifier by the time over which the measurement of the volume of the first gas flowing through the outlet was made.

The gas-laser may comprise a circulation pump that causes the flow rate of the first gas through the power amplifier. The circulation pump may be connected to the outlet of the power amplifier and to the inlet of the power amplifier. The circulation pump may be adapted to transport the gas from the outlet of the power amplifier and to the inlet of the power amplifier.

The reduction of the flow rate of the first gas through the power amplifier may be done, in particular start, when the second gas in the power amplifier is replaced with the first gas.

For example, the flow rate may be reduced by at least 30% or 50%. In particular, the flow rate may be reduced by a percentage in a range of 30% to 90%, in particular 40% to 80%.

In an embodiment of the invention, the first gas may be helium (He). Alternatively or additionally, the second gas may be carbon dioxide (CO₂).

A gas-laser, in particular a CO₂-laser, according to the invention is useable for generating or amplifying a laser beam. The gas-laser comprises a power amplifier, a gas regulator and a control device. The power amplifier is adapted to be fed with a gaseous composition. The gaseous composition is a laser-active medium for generating or amplifying the laser beam. The gaseous composition comprises at least a first gas and a second gas. The first gas has a lower density than the second gas. The gas regulator is adapted to regulate a mass flow of the first gas and a mass flow of the second gas from a gas source to the power amplifier. The control device is adapted to control the gas regulator depending on a mode, in particular an operating mode, of the gas-laser, wherein the mode of the gas-laser is a sleep mode or a standby mode.

The gas-laser may be configured to execute the previously described method. In particular, the gas-laser may be specifically designed and constructed to perform the previously described method. The previously described method may be configured to operate the gas-laser. The description of the method given above may also apply to identical or functionally equivalent features of the gas-laser and/or vice versa.

The gas source may be adapted to provide the first gas and the second gas to the gas-laser.

The gas regulator may comprise a first mass flow controller for controlling a mass flow of the first gas from the gas source to the power amplifier and a second mass flow controller for controlling a mass flow of the second gas from the gas source to the power amplifier.

The first mass flow controller may be in an open state or in a closed state. The power amplifier may be fed with the first gas, when the first mass flow controller is in the open state. The power amplifier may be not fed with the first gas, when the first mass flow controller is in the closed state. When the first mass flow controller is in the open state, the mass flow of the first gas may be adjustable, in particular by controlling the first mass flow controller.

The second mass flow controller may be in an open state or in a closed state. The power amplifier may be fed with the second gas, when the second mass flow controller is in the open state. The power amplifier may be not fed with the second gas, when the second mass flow controller is in the closed state. When the second mass flow controller is in the open state, the mass flow of the second gas may be adjustable, in particular by controlling the second mass flow controller.

The control device may be adapted to control the first mass flow controller to control the mass flow of the first gas. The control device may be adapted to control the second mass flow controller to control the mass flow of the second gas.

The control device may be adapted to control the gas-laser. The control device may comprise an electrical computing unit, in particular a computer and/or a microcontroller. The control device may be adapted to set the gas-laser in the standby mode or in the sleep mode.

In an embodiment of the invention, the control device may be adapted to control the gas regulator in the standby mode of the gas-laser to feed the power amplifier with the first gas and the second gas from the gas source to the power amplifier. The control device may be adapted to control the gas regulator in the sleep mode of the gas-laser to stop the mass flow of the second gas from the gas source to the power amplifier.

The control device may be adapted to control the first mass flow controller and the second mass flow controller of the gas regulator in order to set the first mass flow controller and the second mass flow controller in the open state for feeding the power amplifier with the first gas and the second gas, when the gas-laser is in the standby mode. The control device may be adapted to control the second mass flow controller of the gas regulator in order to set the second mass flow controller in the closed state for stopping the feed of the second gas to the power amplifier, when the gas-laser is in the sleep mode.

The control device may be adapted to control the gas regulator in the sleep mode of the gas-laser to feed the power amplifier with the first gas.

The control device may be adapted to control the gas regulator in the sleep mode of the gas-laser for the purpose of replacing the second gas in the power amplifier with the first gas.

In an embodiment of the invention, the control device may be adapted to cause a reduction in gas pressure in the power amplifier, when the gas-laser is set from the standby mode to the sleep mode.

The control device may be adapted to control the gas regulator to reduce the feed of the first gas and/or of the second gas from the gas source to the power amplifier, when the gas-laser is set from the standby mode to the sleep mode.

The control device may be adapted to control a valve to reduce the gas pressure in the power amplifier, when the gas-laser is set from the standby mode to the sleep mode.

The control device may be adapted to control the gas regulator to stop the feed of the first gas and/or of the second gas from the gas source to the power amplifier, when the gas-laser is set from the standby mode to the sleep mode.

The control device may be adapted to control the gas regulator to increase the gas pressure in the power amplifier, when the gas-laser is set from the sleep mode to the standby mode.

In an embodiment of the invention, the power amplifier may comprise a pressure sensor, in particular a gas pressure sensor, for measuring a gas pressure in the power amplifier. The control device may be adapted to control the gas regulator depending on the measured gas pressure in the power amplifier.

The control device may comprise a target gas pressure. The control device may be adapted to determine if the measured gas pressure deviates from the target gas pressure. The control device may be adapted to control the gas regulator to minimize the deviation of the measured gas pressure from the target gas pressure.

In an embodiment of the invention, the gas-laser may comprise a circulation pump for circulating, in particular moving, the first gas and/or the second gas through the power amplifier. The control device may be adapted to control the circulation pump depending on whether the gas-laser is in the operating mode or in the sleep mode.

The power amplifier may be arranged in a gas circuit of the gas-laser. The circulation pump may circulate the gas through the gas circuit.

The circulation pump may be connected to the outlet of the power amplifier and to the inlet of the power amplifier. The circulation pump may be adapted to pump gas from the outlet of the power amplifier to the inlet of the power amplifier.

The control device may be adapted to control the circulation pump such that the first gas and/or the second gas circulate through the power amplifier at a lower speed in the sleep mode than in the standby mode.

In an embodiment of the invention, the control device may be adapted to control the circulation pump to reduce a flow rate of the first gas through the power amplifier, when the gas-laser is in the sleep mode. This may further reduce the energy consumption of the circulation pump.

In an embodiment of the invention, the control device may be adapted to control the circulation pump to reduce the flow rate of the first gas through the power amplifier, when the gas-laser is in the sleep mode and when an energy consumption of the circulation pump is constant for a predetermined period. This may allow a rapid replacement of the second gas in the power amplifier with the first gas.

In particular, during the replacement of the second gas with the first gas, the energy consumption of the circulation pump may decrease. When the second gas may be completely or almost completely replaced with the first gas, the energy consumption of the circulation pump may be constant. As long as the second gas may be replaced with the first gas, a higher flow rate may cause a faster replacement.

The predetermined period may comprise a value in the range from 1 second to 10 seconds, in particular 2 seconds to 5 seconds.

An EUV light source according to the invention is useable for generating EUV radiation. The EUV light source comprises a previously described gas-laser, a target chamber and a focusing device. The gas-laser is adapted to generate or amplify a laser beam. The target chamber contains a target material for generating the EUV radiation. The focusing device is adapted to focus the laser beam on the target material.

The target chamber may be a vacuum chamber.

The target material may be a metal, for example tin. The target material may be formed as droplets, for example as tin droplets. The formation of the target material as tin droplets may be particularly advantageous for the generation of EUV radiation due to a high yield of EUV radiation.

The focusing device may comprise at least one lens or at least one curved mirror for focusing the laser beam on the target material. In particular, the curved mirror may be formed as a concave mirror. By focusing the laser beam on the target material, a high power density may be achieved on the target material, thereby achieving a greater yield of EUV radiation.

Further advantages and advantageous embodiments of the invention can be derived from the figures, their description and the claims. All features disclosed in the figures, their description and the claims may be essential to the invention, both individually and in any combination. The figures show:
- Fig. 1: schematically shows an EUV light source comprising a gas-laser,
- Fig. 2: shows a graph of the gas pressure in a power amplifier of the gas-laser over time,
- Fig. 3: shows a bar chart of the gas in the power amplifier at different times, and
- Fig. 4: shows a graph of the energy consumption of the gas-laser over time.

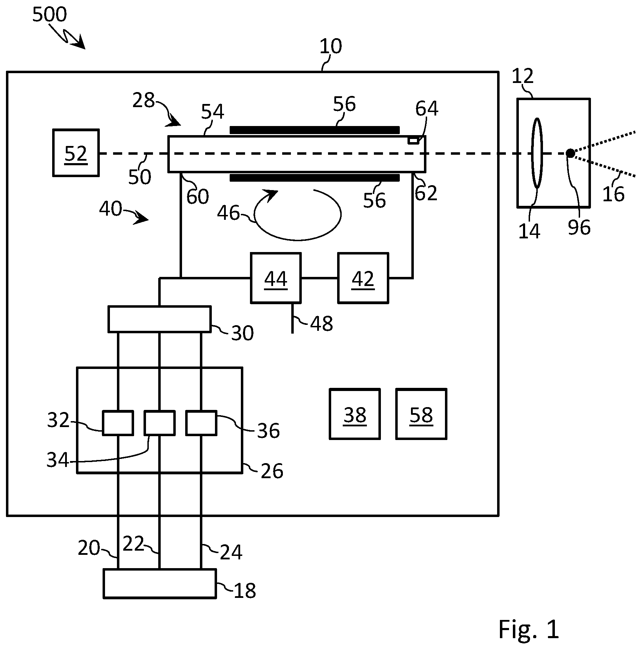

Fig. 1 shows an EUV light source 500. The EUV light source 500 comprises a gas-laser 10, a target chamber 12 and a focusing device 14. The EUV light source 500 is adapted to generate EUV radiation 16.

The gas-laser 10 is a CO₂-laser. The gas-laser 10 is connected to a gas source 18. The gas source 18 provide a first gas 20, a second gas 22 and a third gas 24 to the gas-laser 10. Fig. 1 shows that the gases 20, 22, 24 are each guided through pipes. For a better understanding, the pipe carrying the corresponding gas is labelled with the reference number of the gas in Fig. 1.

The first gas 20 is helium (He). The second gas 22 is carbon dioxide (CO₂). The third gas 24 is nitrogen (N₂). The first gas 20 has a lower density than the second gas 22 and a lower density than the third gas 24.

The gas-laser 10 comprises a gas regulator 26 for controlling a mass flow of each gas 20, 22, 24 from the gas source 18 to a power amplifier 28 of the gas-laser 10. In particular, the gas regulator 26 controls a mass flow of each gas 20, 22, 24 from the gas source 18 to a mixing chamber 30 of the gas-laser 10.

The gas regulator 26 comprises a first mass flow controller 32 for controlling the mass flow of the first gas 20, a second mass flow controller 34 for controlling a mass flow of the second gas 22 and a third mass flow controller 36 for controlling a mass flow of the third gas 24. The mass flow controllers 32, 34, 36 enable the mass flows of the gases 20, 22, 24 to be controlled independently of each other.

Each mass flow controller 32, 34, 36 can be in an open state or in a closed state. If one of the mass flow controllers 32, 34, 36 is in the open state, the mass flow of the gas through the mass flow controller can be controlled.

The gas-laser 10 comprises a control device 38. The control device 38 is a computer. The control device 38 is adapted to control the gas regulator 26. In particular, the control device 38 is adapted to control the mass flow controllers 32, 34, 36. In other words, the control device 38 controls the mass flow controllers 32, 34, 36 such that the power amplifier 28 is fed or supplied with a required gas 20, 22, 24.

The mixing chamber 30 is a chamber into which the three gases 20, 22, 24 are fed depending on the control of the mass flow controllers 32, 34, 36. In the mixing chamber 30, the gases 20, 22, 24 are mixed together to form a gaseous composition. If only the first gas 20, the second gas 22 or the third gas 24 is supplied to the mixing chamber 30, no gaseous composition is formed.

The mixing chamber 30 is connected to a gas circuit 40 of the gas-laser 10. The gas 20, 22, 24 in the mixing chamber 30 is fed into the gas circuit 40. The gas circuit 40 comprises the power amplifier 28, a circulation pump 42 and a gas conditioner 44. Since the gas conditioner 44 is optional, a gas-laser comprising a gas circuit without a gas conditioner is also possible.

The circulation pump 42 is adapted to circulate, in particular to move, the gas 20, 22, 24 through the gas circuit 40. An arrow 46 in Fig. 1 indicates the direction of movement of the gas 20, 22, 24.

The control device 38 is adapted to control the circulation pump 42. The control device 38 is adapted to control a mass flow of the gas 20, 22, 24 through the gas circuit 40, in particular through the gas conditioner 44 and the power amplifier 28, by controlling the circulation pump 42.

The gas conditioner 44 is adapted to condition the gas 20, 22, 24 flowing through the gas conditioner 44. For example, the gas conditioner 44 may filter unwanted particles out of the gas 20, 22, 24, may heat or cool the gas 20, 22, 24 to a desired temperature, and/or may separate the first gas 20, the second gas 22 and/or the third gas 24 out of the gas circuit 40.

The gas conditioner 44 comprises an outlet 48. The gas conditioner 44 is adapted to reduce a gas pressure of the gas 20, 22, 24 inside the gas circuit 40 using the outlet 48. If, for example, the gas pressure in the gas circuit 40 has to be reduced, the gas conditioner 44 is adapted to open the outlet 48 to release gas 20, 22, 24 from the gas circuit 40, for example into an environment of the gas-laser 10.

If a gas-laser does not have a gas conditioner, the outlet may be connected to a valve of the gas-laser. The valve may be adapted to reduce a gas pressure of the gas inside the gas circuit using the outlet.

The control device 38 is adapted to control the gas conditioner 44. The control device 38 is adapted to control the composition of the gaseous composition in the gas circuit 40. The control device 38 is adapted to control the gas conditioner 44 when the first gas 20, the second gas 22 and/or the third gas 24 is to be separated and released from the gas circuit 40 over the outlet 48. The control device 38 is adapted to control the gas regulator 26 when the first gas 20, the second gas 22 and/or the third gas 24 is to be added to the gas circuit 40. In addition, the control device 38 is adapted to control the gas pressure in the gas circuit 40. The control device 38 is adapted to control the gas conditioner 44 when the gas pressure is to be reduced or is adapted to control the gas regulator 26 when the gas pressure is to be increased.

If a gas-laser does not have a gas conditioner, the control device is adapted to control the valve.

The power amplifier 28 is adapted to amplify a laser beam 50. The gas-laser 10 comprises a laser source 52 for generating the laser beam 50. The laser source 52 is a CO₂-laser source. A wavelength of the laser beam 50 is 10.6 µm (Micrometer). The control device 38 is adapted to control the laser source 52.

In an alternative, not shown embodiment, the power amplifier is adapted to generate the laser beam. In this case, the power amplifier is arranged between two mirrors that form a resonator.

The power amplifier 28 comprises a tube 54 and electrodes 56. The electrodes 56 are electrically connected to a high-frequency generator 58 of the gas-laser 10. The high-frequency generator 58 generates a radiofrequency signal or high-frequency signal, which is applied to the electrodes 56 for generating a radiofrequency field or high-frequency field. The tube 54 is arranged between the electrodes 56.

The power amplifier 28 comprises an inlet 60 for introducing the gas 20, 22, 24 into the tube 54 and an outlet 62 for discharging the gas 20, 22, 24 from the tube 54. The circulation pump 42 is adapted to pump the gas 20, 22, 24 from the outlet 62 of the power amplifier 28 to the inlet 60 of the power amplifier 28.

The power amplifier 28 comprises a pressure sensor 64. The pressure sensor 64 is adapted to measure the gas pressure in the power amplifier 28. The pressure sensor 64 is arranged inside the tube 54. The pressure sensor 64 transmit the measured pressure to the control device 38. The control device 38 is adapted to control the gas regulator 26 and the gas conditioner 44 depending on the measured gas pressure in the power amplifier 28.

The gas-laser 10 is adapted to be set in a standby mode or in a sleep mode. In particular, the control device 38 is adapted to set the gas-laser 10 in the standby mode or in the sleep mode. The control device 38 set the gas-laser 10 in the sleep mode, when it is expected that the amplification of laser beam 50 should not take place for at least 4 minutes.

When the gas-laser 10 is in the standby mode, the gas-laser 10 is ready to amplify the laser beam 50. In detail, the control device 38 controls the mass flow controllers 32, 34, 36 and the gas conditioner 44 such that the gaseous composition in the mixing chamber 30 and in the gas circuit 40 comprises a content of helium in the range of 70% to 80%, a content of carbon dioxide in the range of 5% to 10%, and a content of nitrogen in the range of 15% to 20%. Such a gaseous composition is a laser-active medium for amplifying the laser beam 50 and may be named as laser-active gaseous composition. The power amplifier 28 is fed with the laser-active gaseous composition, when the gas-laser 10 is in the standby mode.

To amplify the laser beam 50, the control device 38 must activate the laser source 52 to generate the laser beam 50 and activate the high-frequency generator 58 to apply the radiofrequency field or high-frequency field to the gaseous composition inside the tube 54. After leaving the laser source 52, the laser beam 50 propagates through the power amplifier 28 and is simultaneously amplified in power by the power amplifier 28.

When the gas-laser 10 is in the sleep mode, the gas-laser 10 is not ready to amplify the laser beam 50. The sleep mode is an energy saving mode for reducing the energy consumption of the gas-laser 10.

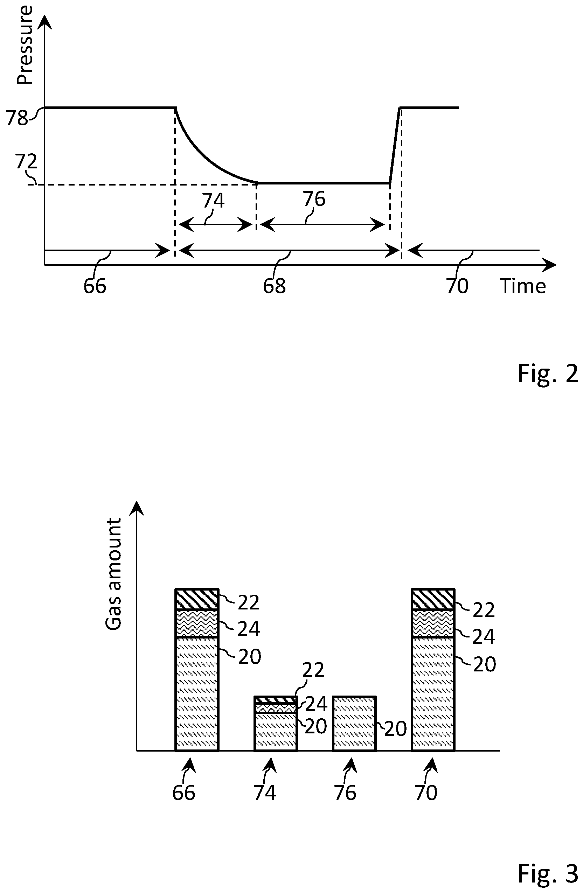

Fig. 2 shows the pressure in the power amplifier 28 over time. In a first period 66, the gas-laser 10 is in the standby mode. In a second period 68, the gas-laser 10 is in the sleep mode. In a third period 70, the gas-laser 10 is in the standby mode.

When the gas-laser 10 is set from the standby mode of the first period 66 to the sleep mode of the second period 68, the control device 38 reduces the gas pressure in the power amplifier 28 by controlling the gas regulator 26 and the gas conditioner 44 until a predetermined gas pressure 72 is measured by the pressure sensor 64. The predetermined gas pressure 72 may be at least 6 times lower than the gas pressure 78 in the power amplifier 28 in the standby mode.

While the gas pressure in the power amplifier 28 reduces, the control device 38 controls the gas regulator 26 such that the mass flow controllers 32, 34, 36 are in the closed state. The feed of the second gas 22 and the feed of the third gas 26 to the power amplifier 28 is stopped, when the gas-laser 10 is set from the standby mode to the sleep mode.

When the gas pressure has reached the predetermined gas pressure 72, the control device 38 controls the first mass flow controller 32 in such a way that the first mass flow controller 32 is in the open state and that the first gas 20 is fed to the gas circuit 40. In addition, the control device 38 controls the gas conditioner 44 to remove the second gas 22 and the third gas 24 from the gas circuit 40. The first gas 20 replaces the second gas 22 and the third gas 24 in the gas circuit 40, in particular in the power amplifier 28, when the gas-laser 10 is in the sleep mode. The power amplifier 28 is only fed or supplied with the first gas 20.

The second period 68 may comprise a first sub-period 74 and a second sub-period 76. In the first sub-period 74, the gas pressure in the power amplifier 28 is reduced to the predetermined gas pressure 72. In the second sub-period 76, the first gas 20 replaces the second gas 22 and the third gas 24 contained in the power amplifier 28.

When the gas-laser 10 is set from the sleep mode of the second period 68 to the standby mode of the third period 70, the control device 38 increases the gas pressure in the power amplifier 28 by controlling the gas regulator 26 and the gas conditioner 44 until the gas pressure 78 of the standby mode is measured by the pressure sensor 64.

While the gas pressure in the power amplifier 28 increases, the control device 38 controls the gas regulator 26 such that the mass flow controllers 32, 34, 36 are in the open state and that the power amplifier 28 is fed with the laser-active gaseous composition.

Therefore, the control device 38 controls the gas regulator 26 depending on whether the gas-laser 10 is in the operating mode or in the sleep mode.

Fig. 3 shows a bar chart of the gases 20, 22, 24 in the power amplifier 28 for the first period 66, the first sub-period 74 of the second period 68, the second sub-period 76 of the second period 68 and the third period 70.

In the first period 66, the power amplifier 28 is supplied with the first gas 20, the second gas 22 and the third gas 24. At the end of the first sub-period 74 of the second period 68, the power amplifier 28 is supplied with the first gas 20, the second gas 22 and the third gas 24 at a reduced pressure. In the second sub-period 76, the power amplifier 28 is supplied only with the first gas 20. In other words, the power amplifier 28 has a gas concentration of the first gas 20 of more than 99%. The second gas 22 and the third gas 24 are replaced with the first gas 20. In the third period 70, the power amplifier 28 is supplied with the first gas 20, the second gas 22 and the third gas 24 at the gas pressure 78 of the standby mode.

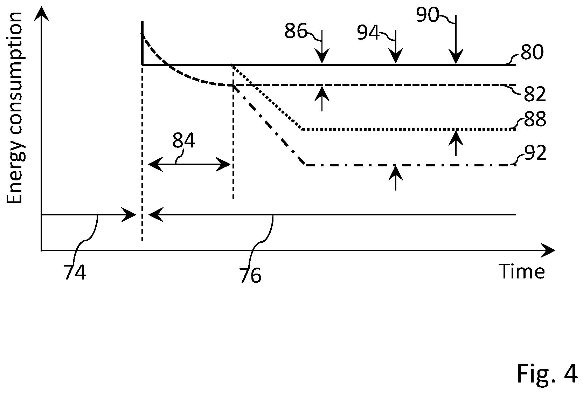

Fig. 4 shows the energy consumption of the gas-laser 10 over the time. In particular, Fig. 4 shows the energy consumption of the gas-laser 10 in the first sub-period 74 of the second period 68 and the second sub-period 76 of the second period 68.

In the first sub-period 74 of the second period 68, the gas-laser 10 reduces the gas pressure in the power amplifier 28. Therefore, the energy consumption is high and not shown in Fig. 4.

If in the second sub-period 76 the first gas 20 does not replace the second gas 22 and the third gas 24, i.e. if the amounts of gases 20, 22, 24 in the second sub-period 76 are equal to the amounts of gases 20, 22, 24 in the first sub-period 74, the gas-laser 10 has an energy consumption that is shown in Fig. 4 with the solid line 80.

If in the second sub-period 76 the first gas 20 replaces the second gas 22 and the third gas 24, i.e. the power amplifier 28 is fed only with the first gas 20, the gas-laser 10 has an energy consumption that is shown in Fig. 4 with the dashed line 82.

Fig. 4 shows that after a period 84, the first gas 20 has completely replaced the second gas 22 and the third gas 24. After completely replacing the second gas 22 and the third gas 24 with the first gas 20, the energy consumption of the gas-laser 10 is constant. A difference 86 between line 80 and line 82 indicates the reduction of energy consumption based on the replacement of the second gas 22 and the third gas 24 with the first gas 20. The difference 86 may be in the range of 3 kW (kilowatt) to 13 kW.

The reduction of energy consumption is possible, because in the sleep mode the circulation pump 42 also moves the gas through the gas circuit 40. Since the density of the first gas 20 is lower than the density of the second gas 22 and the density of the third gas 24, the mass of the gas to be moved through the gas circuit 40 is reduced by replacing the second gas 22 and the third gas 24 with the first gas 20. The circulation pump 42 is therefore required to transport a reduced mass through the gas circuit 40, which reduces the energy consumption of the circulation pump 42 and the energy consumption of the gas-laser 10.

Additionally, a flow rate of the first gas 20 through the power amplifier 28 may be reduced, when the gas-laser 10 is in the sleep mode. However, it is also thinkable to operate the gas-laser without changing the flow rate.

The flow rate of the first gas 20 through the power amplifier 28 describes a volume of the first gas 20 flowing through the power amplifier 28 per unit of time. For example, the volume of the first gas 20 flowing through the outlet 62 of the power amplifier 28 is measured and the flow rate is derived by dividing the measured volume of the first gas 20 flowing through the outlet 62 of the power amplifier 28 by the time over which the measured volume occurs.

The control device 38 controls the circulation pump 42 to reduce the flow rate of the first gas 20, when first gas 20 has completely replaced the second gas 22 and the third gas 24 in the gas circuit 40, in particular the power amplifier 28. The flow rate of the first gas 20 may be reduced by a factor in the range from 2 to 5. In particular, the flow rate of the first gas 20 may be reduced by a factor of 3.

If in the second sub-period 76 the first gas 20 does not replace the second gas 22 and the third gas 24 and if the flow rate of the first gas 20 is reduced, the gas-laser 10 has an energy consumption that is shown in Fig. 4 with the dotted line 88. A difference 90 between line 80 and line 88 indicates the reduction in energy consumption based on the reduced flow rate. The difference 90 may be in the range of 5 kW (kilowatt) to 20 kW.

If in the second sub-period 76 the first gas 20 replaces the second gas 22 and the third gas 24 and if the flow rate of the first gas 20 is reduced, the gas-laser 10 has an energy consumption that is shown in Fig. 4 with the dash-dotted line 92. A difference 94 between line 80 and line 92 indicates the reduction in energy consumption based on the reduced flow rate and the replacement of the second gas 22 and the third gas 24 with the first gas 20. The difference 94 may be in the range of 8 kW (kilowatt) to 33 kW.

Fig. 1 shows that if the gas-laser 10 is in the standby mode and the control device 38 activates the laser source 52 and the high-frequency generator 58, the laser beam 50 is generated and amplified. The laser beam 50 emerges the gas-laser 10 and enters the target chamber 12. The target chamber 12 is a vacuum chamber.

The target chamber 12 contains a target material 96 for generating the EUV radiation 16. The target material 96 is a tin droplet.

The focusing device 14 is placed inside the target chamber 12 to focus the laser beam 50 on the target material 12. The focusing device 14 is a lens.

When the laser beam 50 impacts the target material 12, the laser beam 50 transfers the target material 12 into a plasma state. When the target material 12 recombines from the plasma state to its previous state, the target material 12 emits the EUV radiation 16.

## Claims

1. Method of operating a gas-laser (10), in particular a CO₂-laser, wherein the gas-laser (10) comprises a power amplifier (28), wherein a gaseous composition is feedable to the power amplifier (28), wherein the gaseous composition is a laser-active medium for generating or amplifying a laser beam (50), wherein the gaseous composition comprises at least a first gas (20) and a second gas (22), wherein the first gas (20) has a lower density than the second gas (22), wherein the gas-laser (10) is adapted to be set in a standby mode or in a sleep mode, wherein the method comprises:
- feeding the power amplifier (28) with the first gas (20) and the second gas (22) while the gas-laser (10) is in the standby mode, and
- stopping the feed of the second gas (22) to the power amplifier (28) while the gas-laser (10) is in the sleep mode.

2. Method according to claim 1,
- wherein the method comprises: feeding the power amplifier (28) with the first gas (20) while the gas-laser (10) is in the sleep mode.

3. Method according to anyone of the preceding claims,
- wherein the method comprises: replacing the second gas (22) in the power amplifier (28) with the first gas (20) while the gas-laser (10) is in the sleep mode.

4. Method according to anyone of the preceding claims,
- wherein the method comprises: reducing a gas pressure in the power amplifier (28), when the gas-laser (10) is set from the standby mode to the sleep mode.

5. Method according to claim 4,
- wherein the feed of the second gas (22) to the power amplifier (28) stops, when the gas pressure in the power amplifier (28) is equal to or lower than a predetermined gas pressure (72).

6. Method according to anyone of the preceding claims,
- wherein the method comprises: reducing a flow rate of the first gas (20) through the power amplifier (28) while the gas-laser (10) is in the sleep mode.

7. Method according to anyone of the preceding claims,
- wherein the first gas (20) is helium (He), and/or
- wherein the second gas (22) is carbon dioxide (CO₂).

8. Gas-laser (10), in particular a CO₂-laser, for generating or amplifying a laser beam (50), the gas-laser (10) comprising:
- a power amplifier (28) being adapted to be fed with a gaseous composition, wherein the gaseous composition is a laser-active medium for generating or amplifying the laser beam (50), wherein the gaseous composition comprises at least a first gas (20) and a second gas (22), wherein the first gas (20) has a lower density than the second gas (22),
- a gas regulator (26) being adapted to regulate a mass flow of the first gas (20) and a mass flow of the second gas (22) from a gas source (18) to the power amplifier (28), and
- a control device (38) being adapted to control the gas regulator (26) depending on a mode of the gas-laser (10), wherein the mode of the gas-laser (10) is a sleep mode or a standby mode.

9. Gas-laser (10) according to claim 8,
- wherein the control device (38) is adapted to control the gas regulator (26) in the standby mode of the gas-laser (10) to feed the power amplifier (28) with the first gas (20) and the second gas (22) from the gas source (18),
- wherein the control device (38) is adapted to control the gas regulator (26) in the sleep mode of the gas-laser (10) to stop the mass flow of the second gas (22) from the gas source (18).

10. Gas-laser (10) according to claim 8 or 9,
- wherein the control device (38) is adapted to cause a reduction in gas pressure in the power amplifier (28), when the gas-laser (10) is set from the standby mode to the sleep mode.

11. Gas-laser (10) according to anyone of claims 8 to 10,
- wherein the power amplifier (28) comprises a pressure sensor (64) for measuring a gas pressure in the power amplifier (28),
- wherein the control device (38) being adapted to control the gas regulator (26) depending on the gas pressure measured in the power amplifier (28).

12. Gas-laser (10) according to anyone of claims 8 to 11,
- wherein the gas-laser (10) comprises a circulation pump (42) for circulating the first gas (20) and/or the second gas (22) through the power amplifier (28),
- wherein the control device (38) is adapted to control the circulation pump (42) depending on the mode of the gas-laser (10).

13. Gas-laser (10) according to claim 12,
- wherein the control device (38) is adapted to control the circulation pump (42) to reduce a flow rate of the first gas (20) through the power amplifier (28), when the gas-laser (10) is in the sleep mode.

14. Gas-laser (10) according to claim 13,
- wherein the control device (38) is adapted to control the circulation pump (42) to reduce the flow rate of the first gas (20) through the power amplifier (28), when the gas-laser (10) is in the sleep mode and when an energy consumption of the circulation pump (42) is constant for a predetermined period.

15. EUV light source (500) for generating EUV radiation (16), the EUV light source (500) comprising:
- a gas-laser (10) according to anyone of claims 8 to 14 for generating or amplifying a laser beam (50),
- a target chamber (12) containing a target material (96) for generating the EUV radiation (16), and
- a focusing device (14) for focusing the laser beam (50) on the target material (96).
